(19)

Europäisches
Patentamt
European
Patent Office
Office européen
des brevets

(11) **EP 3 723 044 A1**

(12) **EUROPEAN PATENT APPLICATION**

(43) Date of publication:
**14.10.2020 Bulletin 2020/42**

(51) Int Cl.:
**G06T 7/13** (2017.01)

(21) Application number: **19219778.8**

(22) Date of filing: **27.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.04.2019 CN 201910283689**

(71) Applicant: **Chinese Academy Of Surveying And
Mapping
Beijing 100830 (CN)**

(72) Inventors:
• **LI, Chengming
Beijing, 100830 (CN)**

• **WU, Wei
Beijing, 100830 (CN)**
• **YIN, Yong
Beijing, 100830 (CN)**
• **WU, Pengda
Beijing, 100830 (CN)**
• **GUO, Peipei
Beijing, 100830 (CN)**
• **LIU, Xiaoli
Beijing, 100830 (CN)**

(74) Representative: **Osmans, Voldemars et al
Agency Tria Robit
P.O. Box 22
LV-1010 Riga (LV)**

(54) **METHODS FOR EXTRACTING SKELETON LINES IN INTERSECTION-INTENSIVE AREAS**

(57) The present invention discloses a method for extracting a skeleton line in an intersection-intensive area, comprising following steps: S1: establishing a constrained Delaunay triangulation network for a polygon, encrypting a long side of the polygon, and updating the constrained Delaunay triangulation network; S2: extracting a skeleton line of the polygon based on the updated constrained Delaunay triangulation network; S3: identifying an intersection-intensive area based on the extracted skeleton line; and S4: adjusting and optimizing the skeleton line for the identified intersection-intensive area. The present invention has the following advantages: with the use of this method, the overall features of the original area can be maintained after the extraction of the skeleton line, and both the natural extensibility and the human visual requirements can be satisfied; this method is free from the interference from the boundary with complex branches and the arrangement structure during the extraction of the skeleton line, and can handle the jitter on the skeleton line in this area; the extracted skeleton line will not have great distortion and the overall structure of this area will not be lost.

```
Establish a constrained Delaunay triangulation network for
a polygon, encrypt a long side of the polygon, and update
the constrained Delaunay triangulation network
                          │
                          ▼
Extract a skeleton line of the polygon based on the updated
constrained Delaunay triangulation network
                          │
                          ▼
Identify an intersection-intensive area based on the
extracted skeleton line
                          │
                          ▼
Adjust and optimize the skeleton line for the identified
intersection-intensive area
```

**Fig. 1**

**Description**

**TECHNICAL FIELD**

The present invention relates to the technical field of map making and in particular to a method for extracting a skeleton line in an intersection-intensive area.

**BACKGROUND OF THE PRESENT INVENTION**

Skeleton line extraction is a key step to achieve comprehensive map operations such as polygon dimensionality reduction and splitting. Skeleton line extraction must take into account the shape characteristics of the polygon, can summarize the main structure and extension characteristics of the polygon and meet the visual cognition requirements of the human being while meeting the drawing specifications. At present, the most commonly used method for skeleton line extraction is the skeleton line extraction method based on a boundary-constrained Delaunay triangulation network proposed by DeLucia et al. (1987). A large number of subsequent researchers have improved the skeleton line extraction based on this method. For example, in the paper "Research on Automatic Search Algorithms of Skeleton Lines and Centroids of Polygons" by Chen et al., the Delaunay triangulation network is used to analyze the morphological structure of the polygons, and on this basis, in accordance with the area of the branch parts, the main skeleton lines and the centroids of the polygons are extracted. Patent CN201710973188.1, titled "methods for processing long and narrow pattern spot splitting lines", disclosed a method for processing a long and narrow pattern spot splitting line, wherein triangular division is performed on the long and narrow pattern spots through a Delaunay triangulation network method, and a skeleton line in the long and narrow pattern spots is extracted; meanwhile, jitter on the skeleton line is recognized, and dangling lines are removed. Through the processing method, the pattern spot splitting line which is more consistent with an original graph in shape, natural and smooth can be acquired.

When an existing skeleton line extraction method based on the Delaunay triangulation network is used to extract a skeleton line from intersections of roads or water systems, each intersection is regarded as a unit, and a skeleton line in the intersection area is obtained by setting a direction threshold and a branch node distance threshold. Of course, In the case of simple intersections, such as in the case of a single T-shaped or crisscrossed intersection, the extraction effect is good. This is the case as described in the patent titled "methods for processing long and narrow pattern spot splitting lines". However, in the case of complex intersections, by the existing methods, it is unable to accurately separate out a single branch convergence area, resulting in an inaccurate extracted skeleton line. In addition, the shape of the skeleton lines in the intersection-intensive area is complicated, and the overall features of the area, which are formed by the correlation between the branches, cannot be taken into account if regarding each branch convergence area as a unit, resulting in the destruction to the overall structure of the area.

**SUMMARY OF THE PRESENT INVENTION**

An objective of the present invention is to provide a method for extracting a skeleton line in an intersection-intensive area, to solve the above-mentioned problems in the prior art.

For this purpose, the present invention employs the following technical solutions:

A method for extracting a skeleton line in an intersection-intensive area is provided, comprising following steps:

S1: establishing a constrained Delaunay triangulation network for a polygon, encrypting a long side of the polygon, and updating the constrained Delaunay triangulation network;

S2: extracting a skeleton line of the polygon based on the updated constrained Delaunay triangulation network;

S3: identifying an intersection-intensive area based on the extracted skeleton line; and

S4: adjusting and optimizing the skeleton line for the identified intersection-intensive area.

2. The method for extracting a skeleton line in an intersection-intensive area according to claim 1, wherein, the step S1 further comprises following steps:

S101: identifying obtuse triangles from type-III triangles in the constrained Delaunay triangulation network, setting a minimal angle threshold, marking obtuse triangles having a minimal angle less than the minimal angle threshold and putting them in a triangle set;

S102: identifying longest sides of all triangles in the triangle set, and finding type-II triangles which are adjacent to those longest sides and have a side that is a boundary;

S103: selecting all type-II triangles whose longest side is a boundary, marking them as triangles to be encrypted, and marking their respective longest side as a local long side to be encrypted; and

S104: setting, as an encryption step, a shortest side of type-III triangles in the triangle set associated with the triangles to be encrypted, and encrypting the triangles to be encrypted and the local long side to be encrypted with the encryption step.

Preferably, the step S3 comprises following steps:

S301: building a topology between points and lines for an initial skeleton line, and recording the number of associated arcs to which each node in the skeleton line topology is associated;

S302: selecting a node having three associated arcs, this node being called a three-intersection node and an area containing this node being called a three-intersection area;

S303: calculating a local approximate width of the three-intersection area;

S304: defining an arc having a starting endpoint and an ending endpoint that are three-intersection nodes as a link arc, calculating a local approximate width of an area containing a starting node and of an area containing an ending node of the link arc, and using the greater one of the local approximate widths as the local approximate width of the area containing the link arc;

S305: regarding the length between the starting node and the ending node of the link arc, except for the internal length of the type-III triangles, as the valid length of the link arc, and determining whether the valid length of the link arc is less than the local approximate width of the area containing the link arc, wherein, if so, the starting node and the ending node of the link arc are associated and this link arc is an associated arc, and if not, the starting node and the ending node of the link arc are not associated and this link arc is not an associated arc; and

S306: putting all associated arcs obtained in the step S305 into an associated arc set; successively selecting one associated arc from the associated arc set as a first associated arc and using the starting node and the ending node of the first associated arc as tracking nodes, regarding an associated arc containing the starting node or the ending node of the first associated arc as a second associated arc and recording the second associated arc in the associated arc set; and, at the end of the detection of all associated arcs, clustering the associated arcs to obtain an intersection concentration result.

Preferably, the step S4 comprises following steps:

S401: weighting, by the CRITIC method, the length, connectivity, proximity and betweenness of a link arc to obtain an importance of the link arc;

S402: selecting a three-intersection node having an associated arc on only one side as a starting node for stroke connection tracking, and using the link arc of the three-intersection node as a tracking arc and a node on the other side of the tracking arc as a tracking node;

S403: using link arcs for the tracking node as a stroke connection candidate set, and calculating the importance of each link arc;

S404: preferentially linking a link arc having a high importance to a previous link arc to form a stroke;

S405: on the basis of the step S403 and the step S404, continuously tracking upward to calculate the stroke connection until there is no link arc for the tracking node, and then ending the single stroke connection;

S406: exploring branched link arcs for the existing stroke connection until all link arcs in the intersection-intensive area have been calculated, and then ending the calculation of the stroke connection; and

S407: on the basis of the calculated stroke connection in the intersection-intensive area, by using two link arcs on the stroke connection as reference arcs, and by regarding a midpoint of a line between two points on a side of a type-III triangle as an adjustment position for the three-intersection node, linking three link arcs associated with the three-intersection node to this midpoint to complete the adjustment of the skeleton line in the three-intersection area.

Preferably, the intersection node is a central point of a type-III triangle.

Preferably, the local approximate width of the three-intersection area is twice the maximum value of the internal skeleton line of a type-III triangle corresponding to the three-intersection point.

The present invention has the following beneficial effects: 1. with the use of this method, the overall features of the original area can be maintained after the extraction of the skeleton line, and both the extensibility and the human visual requirements can be satisfied;2. the identification of an intersection-intensive area and the extraction of the skeleton line are realized, and the skeleton line is optimized in accordance with the good continuity of the stroke connection so that the resulting skeleton line is more scientific and accurate; and3. this method is free from the interference from the boundary with complex branches and the arrangement structure during the extraction of the skeleton line, and can handle the jitter on the skeleton line in this area; the extracted skeleton line will not have great distortion and the overall structure of this area will not be lost.

**BRIEF DESCRIPTION OF THE DRAWINGS**

Fig. 1 is a flowchart of a skeleton line extraction method in an embodiment of the present invention;

Fig. 2 is a flowchart of the step S1 in an embodiment of the present invention;

Fig. 3 is a schematic view of an elongated type-III triangle in an embodiment of the present invention;

Fig. 4 is a schematic view of a type-II triangle having a side that is a boundary in an embodiment of the present invention;

Fig. 5 is a schematic view of a triangle having a local long side to be encrypted in an embodiment of the present invention;

Fig. 6 is a schematic view of a triangle encrypted with an encryption step in an embodiment of the present invention;

Fig. 7 is a flowchart of the step S3 in an embodiment of the present invention;

Fig. 8 is a schematic view of a three-intersection node in an embodiment of the present invention;

Fig. 9 is a schematic view of a link arc in an embodiment of the present invention;

Fig. 10 is a schematic view of the three-intersection concentration result in an embodiment of the present invention;

Fig. 11 is a flowchart of the step S4 in an embodiment of the present invention;

Fig. 12 is a schematic view of the three-intersection area, before the adjustment of the skeleton line, in an embodiment of the present invention;

Fig. 13 is a schematic view of the three-intersection area, after the adjustment of the skeleton line, in an embodiment of the present invention;

Fig. 14 is a schematic view of the original skeleton line in an embodiment of the present invention;

Fig. 15 is a schematic view of extracting a skeleton line by an existing method in an embodiment of the present invention; and

Fig. 16 is a schematic view of extracting a skeleton line by the method of the present invention in an embodiment of the present invention.

**DETAILED DESCRIPTION OF THE PRESENT INVENTION**

In order to make the objectives, technical solutions and advantages of the present invention clearer, the present invention will be further described below in detail with reference to the accompanying drawings.It should be understood that the specific implementation to be described herein is merely used to explain the present invention, rather than limiting the present invention.

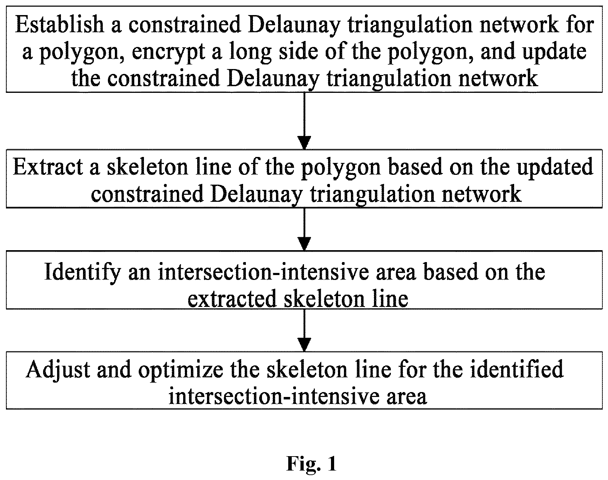

As shown in Fig. 1, the present invention provides a method for extracting a skeleton line in an intersection-intensive area, comprising following steps:

S1: establishing a constrained Delaunay triangulation network for a polygon, encrypting a long side of the polygon, and updating the constrained Delaunay triangulation network;

S2: extracting a skeleton line of the polygon based on the updated constrained Delaunay triangulation network;

S3: identifying an intersection-intensive area based on the extracted skeleton line; and

S4: adjusting and optimizing the skeleton line for the identified intersection-intensive area.

With the above steps, the identification of an intersection-intensive area and the extraction of the skeleton line can be realized, and the skeleton line is optimized in accordance with the good continuity of the stroke connection so that the resulting skeleton line is more scientific and accurate, extends naturally and satisfies the human visual requirements.

Embodiment 1

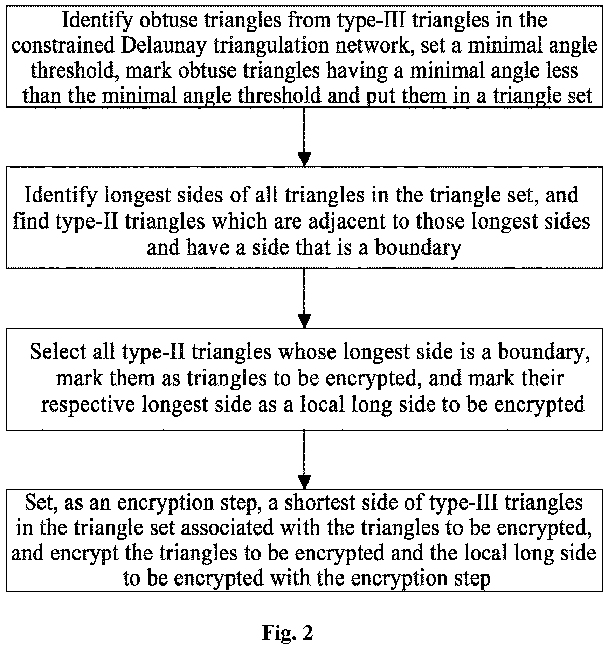

As shown in Figs. 2-6, the specific steps of the step S1 are described in detail in this embodiment. The step S1 specifically comprises the following steps, as shown in Fig. 2:

S101: identifying obtuse triangles from type-III triangles in the constrained Delaunay triangulation network, setting a minimal angle threshold, marking obtuse triangles having a minimal angle less than the minimal angle threshold and putting them in a triangle set;

S102: identifying longest sides of all triangles in the triangle set, and finding type-II triangles which are adjacent to those longest sides and have a side that is a boundary;

S103: selecting all type-II triangles whose longest side is a boundary, marking them as triangles to be encrypted, and marking their respective longest side as a local long side to be encrypted; and

S104: setting, as an encryption step, a shortest side of type-III triangles in the triangle set associated with the triangles to be encrypted, and encrypting the triangles to be encrypted and the local long side to be encrypted with the encryption step.

In this embodiment, in the step S1, a suitable constrained Delaunay triangulation network is established for a polygon, to be convenient for the subsequent extraction of the skeleton line based on the triangulation network. Since, in an intersection-intensive area, there may be a large number of complex areas having intensive branches on one side and no branch on the other side, there will be a large deviation in the identification of branch concentration areas if directly extracting the skeleton line by the constrained Delaunay triangulation network without encrypting; and invalid branches may be caused in the normal endings if encrypting the whole area conventionally. On that account, those complex areas are encrypted in their nodes by side self-adaptive encryption.

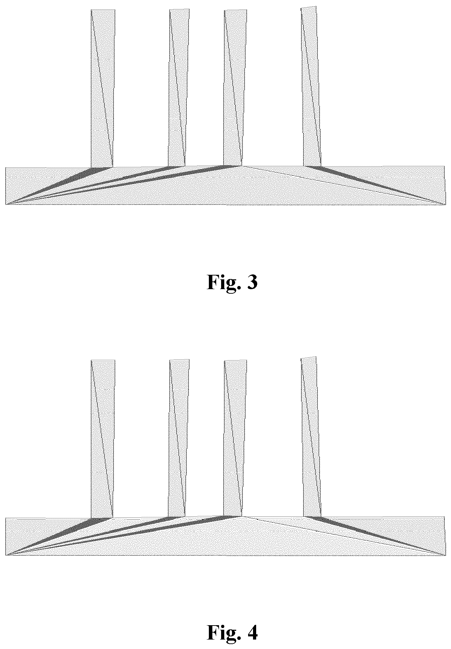

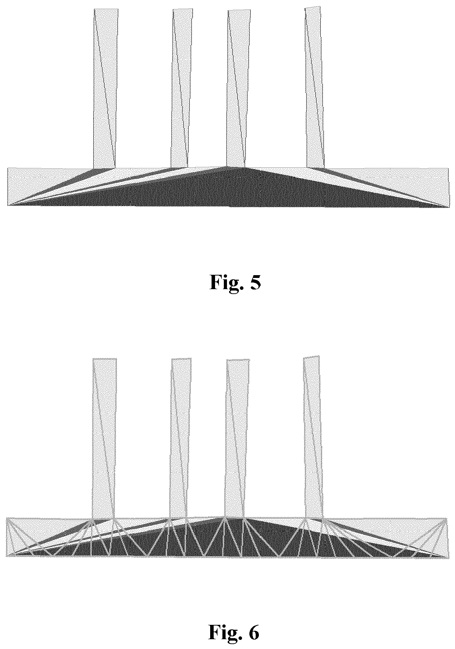

In this embodiment, first, obtuse triangles are identified from type-III triangles, a minimal angle threshold Amin is set, and obtuse triangles having a minimal angle less than the minimal angle threshold Amin are marked and put in a triangle set S, as indicated by the black triangles in Fig. 3. Then, longest sides of all triangles in the triangle set S are identified, and type-II triangles which are adjacent to those longest sides and have a side that is a boundary are found, as indicated by the black triangles in Fig. 4. Then, the longest side of the type-II triangles is identified, it is determined whether the longest side is a boundary, and if it is a boundary, the longest side is marked as a local long side to be encrypted and also the type-II triangles are marked as triangles to be encrypted, as indicated by the black triangles in Fig. 5. A shortest side of type-III triangles in the type-III triangle set associated with the type-II triangles to be encrypted is set as an encryption step. The triangles to be encrypted and the local long side to be encrypted are encrypted with the encryption step, as shown in Fig. 6.

Embodiment 2

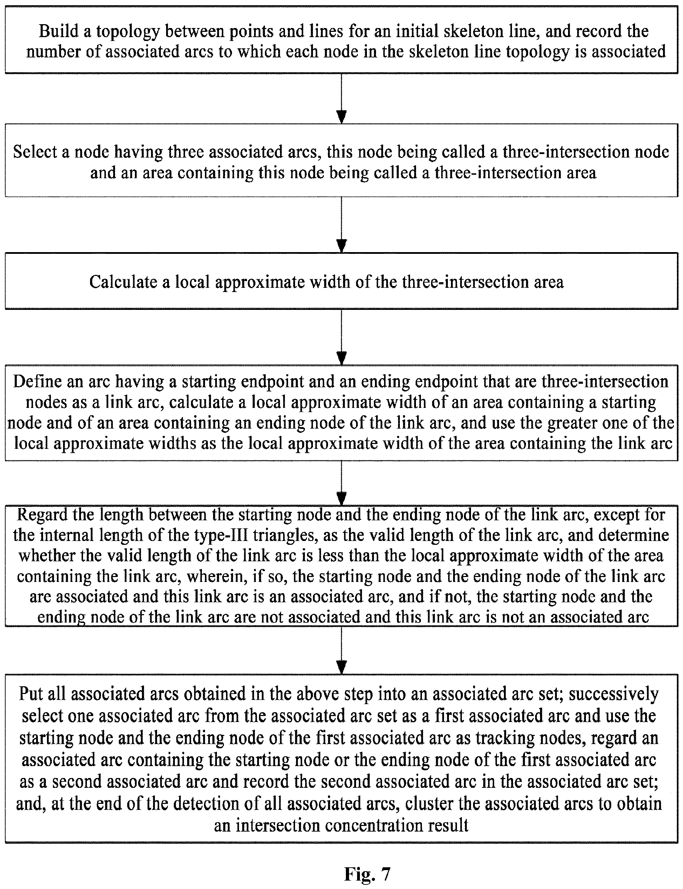

As shown in Figs. 7-10, the specific steps of the step S3 are described in detail in this embodiment. The step S3 specifically comprises the following steps, as shown in Fig. 7:

S301: building a topology between points and lines for an initial skeleton line, and recording the number of associated arcs to which each node in the skeleton line topology is associated;

S302: selecting a node having three associated arcs, this node being called a three-intersection node and an area containing this node being called a three-intersection area;

S303: calculating a local approximate width of the three-intersection area;

S304: defining an arc having a starting endpoint and an ending endpoint that are three-intersection nodes as a link arc, calculating a local approximate width of an area containing a starting node and of an area containing an ending node of the link arc, and using the greater one of the local approximate widths as the local approximate width of the area containing the link arc;

S305: regarding the length between the starting node and the ending node of the link arc, except for the internal length of the type-III triangles, as the valid length of the link arc, and determining whether the valid length of the link arc is less than the local approximate width of the area containing the link arc, wherein, if so, the starting node and the ending node of the link arc are associated and this link arc is an associated arc, and if not, the starting node and the ending node of the link arc are not associated and this link arc is not an associated arc; and

S306: putting all associated arcs obtained in the step S305 into an associated arc set; successively selecting one associated arc from the associated arc set as a first associated arc and using the starting node and the ending node of the first associated arc as tracking nodes, regarding an associated arc containing the starting node or the ending node of the first associated arc as a second associated arc and recording the second associated arc in the associated arc set; and, at the end of the detection of all associated arcs, clustering the associated arcs to obtain an intersection concentration result.

In this embodiment, usually, the intersection-intensive area is reflected in the intensive concentration of three-intersection points. To extract a skeleton line in such an intersection-intensive area, it is necessary to identify those intensive three-intersection points, and then specifically extract and repair the skeleton line. This process includes identification of three-intersection points, association of three-intersection points, and concentration of three-intersection points. Wherein:

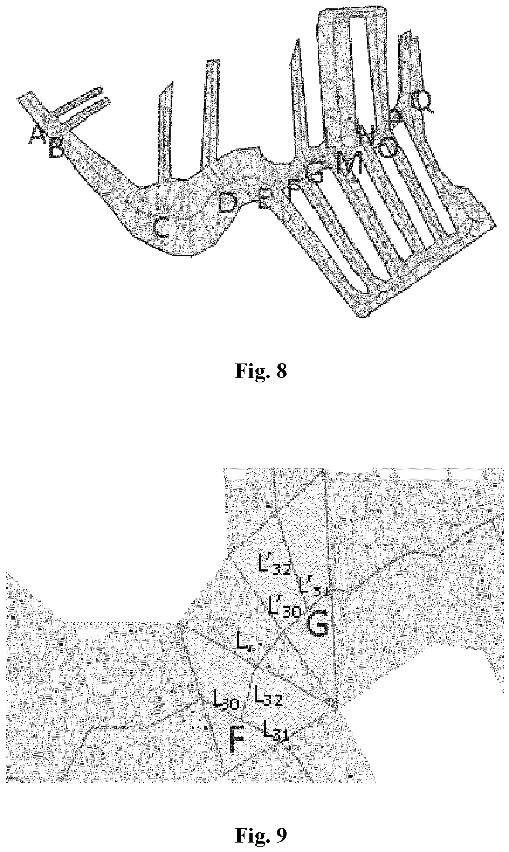

(1) Identification of three-intersection points: A topology between points and lines for an initial skeleton line is built, and the number of associated arcs to which any node in the skeleton line topology is associated is denoted by ArcNum(Node).If, for a certain node, ArcNum(Node)=3, then this node is a three-intersection node and an area containing this node is a three-intersection area, as shown by A-P in Fig. 8. It may be found that those three-intersection nodes are central points of the type-III triangles.

(2) Association of three-intersection points: Whether the identified three-intersection points are concentrated is determined by the link arcs between the three-intersection points. The link arcs are defined as follows: an arc having a starting endpoint and an ending endpoint that are three-intersection nodes is defined as a three-intersection link arc. The specific association process will be described below.

1) Calculation of the local approximate width $W_{NODE}$ of the three-intersection area: the local approximate width $W_{NODE}$ of the three-intersection area is twice the maximum value of the internal skeleton line of a type-III triangle corresponding to the three-intersection point, i.e., $W_{NODE}=Max(L_{30},L_{31},L_{32}) \times 2$.

2) Calculation of the local approximate width $W_{ARC}$ of the area containing the link arc: a local approximate width $W_{Ns}$, $W_{Ne}$ of an area containing a starting node $N_s$ and of an area containing an ending node $N_e$ of the link arc is calculated, and the greater one of the local approximate widths is used as the local approximate width $W_{ARC}$ of the area containing the link arc, i.e., $W_{ARC}=Max(W_{Ns},W_{Ne})$.

3) Calculation of the valid length $L_v$ of the link arc: the length between the starting node and the ending node of the link arc, except for the internal length of the type-III triangles, is regarded as the valid length $L_v$ of the link arc, as shown in Fig. 9. The valid length of the link arc between the starting node F and the ending node G is $L_v=L_{FG}-L_{32}-L'_{30}$.

4) If the valid length $L_v$ of the link arc between two three-intersection nodes is less than the local approximate width $W_{ARC}$ of the area containing the link arc, i.e., $ArcNum(N_s)=3$, $ArcNum(N_e)=3$ and $L_v<W_{ARC}$, then, the two three-intersection nodes are associated and this link arc is denoted by $Arc_{link}$; and if not, the starting node and the ending node of the link arc are not associated.

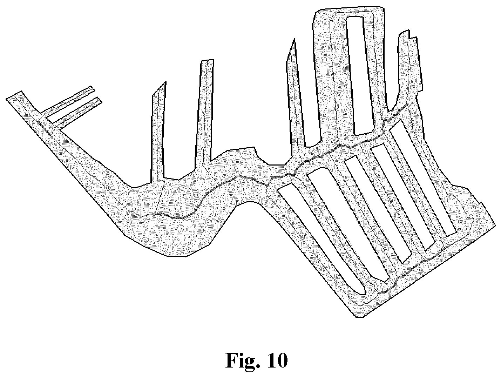

(3) Concentration of three-intersection points: associated arcs $Arc_{link}$ for all three-intersection nodes of the polygon are calculated and put into a set $S(Arc_{link})$; any one $Arc_{link}$ is selected and the starting node $N_s$ and the ending node $N_e$ of the selected $Arc_{link}$ are used as tracking nodes; the presence of $Arc_{link}$ (except for the $Arc_{link}$ itself) for the starting node $N_s$ and the ending node $N_e$ of the selected $Arc_{link}$ is determined, and if so, the detected $Arc_{link}$ is recorded in the associated $Arc_{link}$ set $NeighborArc_{link}(Arc_{link})$; and, at the end of the detection of all $ArC_{link}$, they are clustered to obtain an intersection concentration result, as shown in Fig. 10.

Embodiment 3

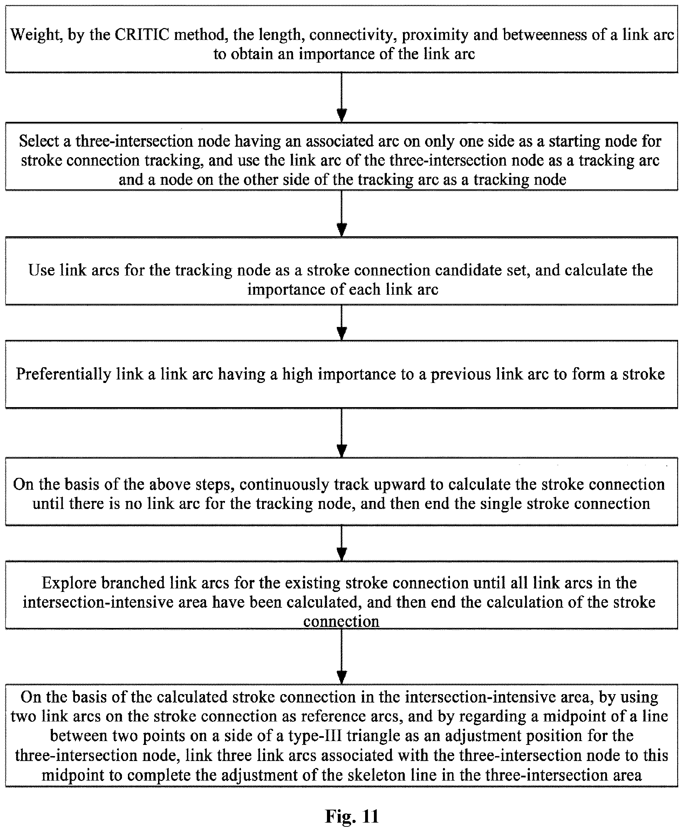

As shown in Figs. 11-13, the specific steps of the step S4 are described in detail in this embodiment. The step S4 specifically comprises the following steps, as shown in Fig. 11:

S401: weighting, by the CRITIC method, the length, connectivity, proximity and betweenness of a link arc to obtain an importance of the link arc;

S402: selecting a three-intersection node having an associated arc on only one side as a starting node for stroke connection tracking, and using the link arc of the three-intersection node as a tracking arc and a node on the other side of the tracking arc as a tracking node;

S403: using link arcs for the tracking node as a stroke connection candidate set, and calculating the importance of each link arc;

S404: preferentially linking a link arc having a high importance to a previous link arc to form a stroke;

S405: on the basis of the step S403 and the step S404, continuously tracking upward to calculate the stroke connection until there is no link arc for the tracking node, and then ending the single stroke connection;

S406: exploring branched link arcs for the existing stroke connection until all link arcs in the intersection-intensive area have been calculated, and then ending the calculation of the stroke connection; and

S407: on the basis of the calculated stroke connection in the intersection-intensive area, by using two link arcs on the stroke connection as reference arcs, and by regarding a midpoint of a line between two points on a side of a type-III triangle as an adjustment position for the three-intersection node, linking three link arcs associated with the three-intersection node to this midpoint to complete the adjustment of the skeleton line in the three-intersection area.

In this embodiment, for any three-intersection area, the internal skeleton line is extracted by taking the stroke features into account.First, the stroke is built by using a link arc as a unit; and then, the skeleton line in a three-intersection area is adjusted so that it extends naturally according to the stroke features. In this way, a skeleton line better meeting the human cognition requirements is obtained.The followings are included.

(1) Evaluation of the importance of the arcThe importance of the link arc is determined by weighting. In this process, by the CRITIC method, the length, connectivity, proximity and betweenness of a link arc are weighted to obtain the importance of the link arc. Wherein, the meaning of the parameters of the link arc is shown in Table 1. This table provides the meaning of the parameters of the link arc and their calculation methods.

Table 1

| Parameter | Meaning | Calculation method |
|---|---|---|
| Length | The length of the link arc | $L=Distance(Ns,Ne)$ (See 3.2.2) |

(continued)

| Parameter | Meaning | Calculation method |
|---|---|---|
| Approximate width | Local approximate width of the link arc | $W_{NODE}=Max(L_{30},L_{31},L_{32})\times 2$ (see 3.2.2) |
| Connectivity | The number of other link arcs to which this link arc is associated | $$D(v_i)=\sum_{k=1}^{n}r(v_i,v_k)$$ where, $r(v_i,v_k)$ represents the connectivity between nodes; the value is 1 if they are connected, and the value is 0 if they are not connected |
| Proximity | The minimal number of connections from this link arc to all other link arcs, reflecting the probability that other link arcs are concentrated at this link arc | $$C(v_i)=\frac{n-1}{\sum_{k=1}^{n}d(v_i,v_k)}$$ where, $d(v_i,v_k)$ represents the shortest distance between two nodes |
| Betweenness | The degree of betweenness of this link arc between other link arcs, reflecting whether this link arc plays a role of bridge | $$B(v_i)=\frac{1}{(n-1)(n-2)}\sum_{j,k\in n;j\neq k;k\neq i}\frac{m_{jk}(v_i)}{m_{jk}}$$ where, $m_{jk}$ represents the number of shortest paths between two nodes; and $m_{jk}(v_i)$ represents the number of nodes $v_i$ through which the shortest paths between two nodes pass |

(2) Building of the stroke connection. Based on the importance of each link arc, the stroke connection for the intersection-intensive area is calculated by iterations, mainly including the following steps:

1) identifying and selecting any one three-intersection node having an associated arc on only one side as a starting node for stroke connection tracking, and using the link arc of the three-intersection node as a tracking arc and a node on the other side of the tracking arc as a tracking node;

2) using link arcs for the tracking node as a stroke connection candidate set R, and calculating the importance of each link arc;

3) preferentially linking a link arc having a high importance to a previous link arc to form a stroke;

4) on the basis of the step S403 and the step S404, continuously tracking upward to calculate the stroke connection until there is no link arc for the tracking node, and then ending the single stroke connection; and

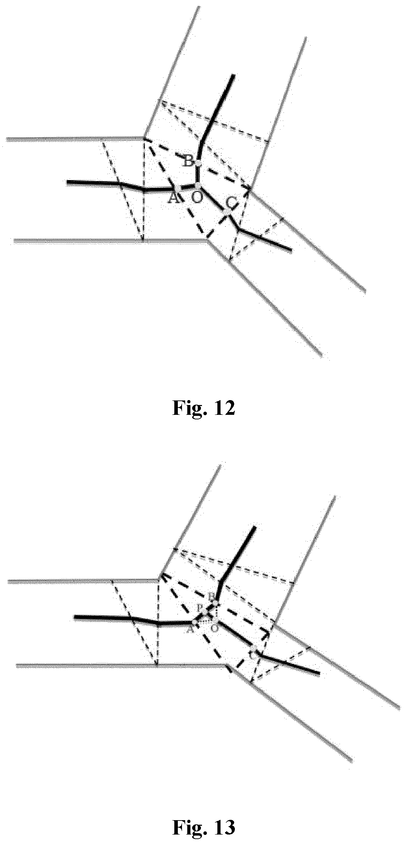

5) exploring branched link arcs for the existing stroke connection until all link arcs in the intersection-intensive area have been calculated, and then ending the calculation of the stroke connection, as shown in Fig. 12.

(3) Adjustment of the skeleton line

The link arc Arc$_{link}$, as the basic unit for the stroke connection for the intersection-intensive area, consists of two three-intersection nodes. For any one three-intersection node, by using two link arcs on the stroke connection as reference arcs, and by regarding a midpoint of a line between two points on a side of a type-III triangle as an adjustment position for the three-intersection node, three link arcs associated with the three-intersection node are linked to this midpoint to complete the adjustment of the skeleton line in the three-intersection area. As shown in Fig. 13, at the three-intersection node O, it is assumed that arcs OA and OB belong to a same stroke, the midpoint P on AB is selected to form AP, BP and OP to form a new skeleton line.

Embodiment 4

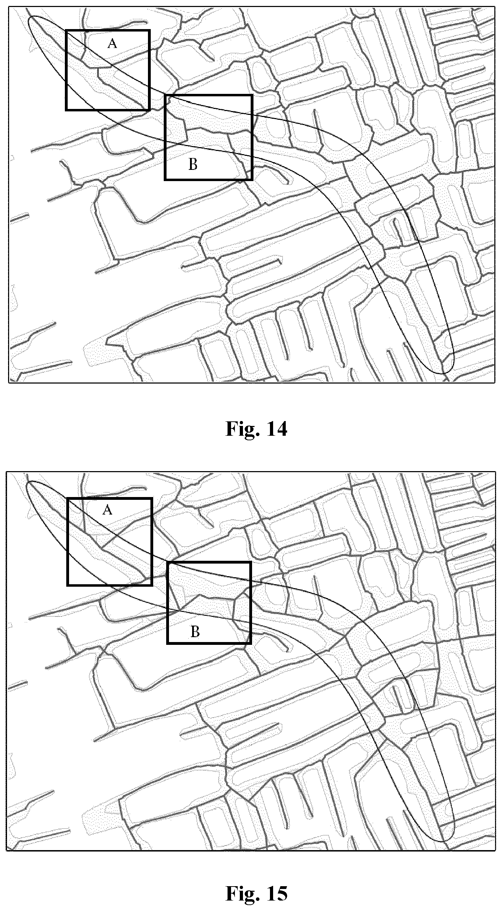

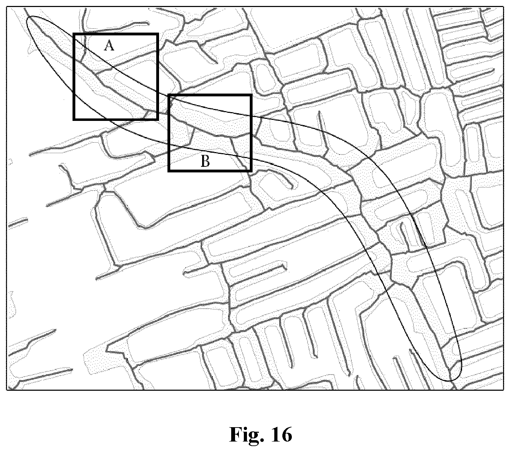

As shown in Figs. 14-16, in this embodiment, three methods are used to extract a skeleton line in an intersection-intensive area. The extraction results are shown in Figs. 14-16, where Fig. 14 shows the original skeleton line, Fig. 15 shows the skeleton line obtained by using the existing methods, and Fig. 16 shows the skeleton line obtained by using the method of the present invention. It may be found by comparison that, by the existing methods and the method of the present invention, the bend and jitter of the original skeleton line at the three-intersection point can be partially repaired, and the main structure and the extensibility of the ground features are well expressed, as shown by A in Figs. 15 and 16. However, for an intersection-intensive area, the existing methods are highly subject to the interference from the boundary with complex branches and the arrangement structure, the jitter on the skeleton line in this area cannot be handled, the extracted skeleton line is greatly distorted, and thus the overall structure of this area is lost. In contrast, by the method of the present invention, the main structure of this area is well extracted, and the skeleton line of the main structure is accurately described, as shown by B in Figs. 15 and 16.

By the technical solutions disclosed in the present invention, the following beneficial effects are obtained.

The present invention provides a method for extracting a skeleton line in an intersection-intensive area. With the use of this method, the overall features of the original area can be maintained after the extraction of the skeleton line, and both the extensibility and the human visual requirements can be satisfied; the identification of an intersection-intensive area and the extraction of the skeleton line are realized, and the skeleton line is optimized in accordance with the good continuity of the stroke connection so that the resulting skeleton line is more scientific and accurate; and this method is free from the interference from the boundary with complex branches and the arrangement structure during the extraction of the skeleton line and can handle the jitter on the skeleton line in this area, and the extracted skeleton line will not have great distortion and the overall structure of this area will not be lost.

What described above is a preferred implementation of the present invention, it should be noted that, for a person of ordinary skill in the art, a number of improvements and modifications may be made without departing from the principle of the present invention, and those improvements and modifications shall also be regarded as falling into the protection scope of the present invention.

## Claims

1.  A method for extracting a skeleton line in an intersection-intensive area, comprising following steps:

    S1: establishing a constrained Delaunay triangulation network for a polygon, encrypting a long side of the polygon, and updating the constrained Delaunay triangulation network;
    S2: extracting a skeleton line of the polygon based on the updated constrained Delaunay triangulation network;
    S3: identifying an intersection-intensive area based on the extracted skeleton line; and
    S4: adjusting and optimizing the skeleton line for the identified intersection-intensive area.

2.  The method for extracting a skeleton line in an intersection-intensive area according to claim 1, wherein, the step S1 further comprises following steps:

    S101: identifying obtuse triangles from type-III triangles in the constrained Delaunay triangulation network, setting a minimal angle threshold, marking obtuse triangles having a minimal angle less than the minimal angle threshold and putting them in a triangle set;
    S102: identifying longest sides of all triangles in the triangle set, and finding type-II triangles which are adjacent to those longest sides and have a side that is a boundary;
    S103: selecting all type-II triangles whose longest side is a boundary, marking them as triangles to be encrypted, and marking their respective longest side as a local long side to be encrypted; and
    S104: setting, as an encryption step, a shortest side of type-III triangles in the triangle set associated with the triangles to be encrypted, and encrypting the triangles to be encrypted and the local long side to be encrypted with the encryption step.

3.  The method for extracting a skeleton line in an intersection-intensive area according to claim 1, wherein, the step S3 comprises following steps:

    S301: building a topology between points and lines for an initial skeleton line, and recording the number of associated arcs to which each node in the skeleton line topology is associated;
    S302: selecting a node having three associated arcs, this node being called a three-intersection node and an area containing this node being called a three-intersection area;
    S303: calculating a local approximate width of the three-intersection area;
    S304: defining an arc having a starting endpoint and an ending endpoint that are three-intersection nodes as a link arc, calculating a local approximate width of an area containing a starting node and of an area containing an ending node of the link arc, and using the greater one of the local approximate widths as the local approximate width of the area containing the link arc;

S305: regarding the length between the starting node and the ending node of the link arc, except for the internal length of the type-III triangles, as the valid length of the link arc, and determining whether the valid length of the link arc is less than the local approximate width of the area containing the link arc, wherein, if so, the starting node and the ending node of the link arc are associated and this link arc is an associated arc, and if not, the starting node and the ending node of the link arc are not associated and this link arc is not an associated arc; and

S306: putting all associated arcs obtained in the step S305 into an associated arc set; successively selecting one associated arc from the associated arc set as a first associated arc and using the starting node and the ending node of the first associated arc as tracking nodes, regarding an associated arc containing the starting node or the ending node of the first associated arc as a second associated arc and recording the second associated arc in the associated arc set; and, at the end of the detection of all associated arcs, clustering the associated arcs to obtain an intersection concentration result.

4. The method for extracting a skeleton line in an intersection-intensive area according to claim 1, wherein, the step S4 comprises following steps:

S401: weighting, by the CRITIC method, the length, connectivity, proximity and betweenness of a link arc to obtain an importance of the link arc;

S402: selecting a three-intersection node having an associated arc on only one side as a starting node for stroke connection tracking, and using the link arc of the three-intersection node as a tracking arc and a node on the other side of the tracking arc as a tracking node;

S403: using link arcs for the tracking node as a stroke connection candidate set, and calculating the importance of each link arc;

S404: preferentially linking a link arc having a high importance to a previous link arc to form a stroke;

S405: on the basis of the step S403 and the step S404, continuously tracking upward to calculate the stroke connection until there is no link arc for the tracking node, and then ending the single stroke connection;

S406: exploring branched link arcs for the existing stroke connection until all link arcs in the intersection-intensive area have been calculated, and then ending the calculation of the stroke connection; and

S407: on the basis of the calculated stroke connection in the intersection-intensive area, by using two link arcs on the stroke connection as reference arcs, and by regarding a midpoint of a line between two points on a side of a type-III triangle as an adjustment position for the three-intersection node, linking three link arcs associated with the three-intersection node to this midpoint to complete the adjustment of the skeleton line in the three-intersection area.

5. The method for extracting a skeleton line in an intersection-intensive area according to claim 1, wherein the intersection node is a central point of a type-III triangle.

6. The method for extracting a skeleton line in an intersection-intensive area according to claim 1, wherein the local approximate width of the three-intersection area is twice the maximum value of the internal skeleton line of a type-III triangle corresponding to the three-intersection point.

Establish a constrained Delaunay triangulation network for
a polygon, encrypt a long side of the polygon, and update
the constrained Delaunay triangulation network

Extract a skeleton line of the polygon based on the updated
constrained Delaunay triangulation network

Identify an intersection-intensive area based on the
extracted skeleton line

Adjust and optimize the skeleton line for the identified
intersection-intensive area

**Fig. 1**

Identify obtuse triangles from type-III triangles in the constrained Delaunay triangulation network, set a minimal angle threshold, mark obtuse triangles having a minimal angle less than the minimal angle threshold and put them in a triangle set

Identify longest sides of all triangles in the triangle set, and find type-II triangles which are adjacent to those longest sides and have a side that is a boundary

Select all type-II triangles whose longest side is a boundary, mark them as triangles to be encrypted, and mark their respective longest side as a local long side to be encrypted

Set, as an encryption step, a shortest side of type-III triangles in the triangle set associated with the triangles to be encrypted, and encrypt the triangles to be encrypted and the local long side to be encrypted with the encryption step

**Fig. 2**

**Fig. 3**

**Fig. 4**

Fig. 5

Fig. 6

Build a topology between points and lines for an initial skeleton line, and record the number of associated arcs to which each node in the skeleton line topology is associated

Select a node having three associated arcs, this node being called a three-intersection node and an area containing this node being called a three-intersection area

Calculate a local approximate width of the three-intersection area

Define an arc having a starting endpoint and an ending endpoint that are three-intersection nodes as a link arc, calculate a local approximate width of an area containing a starting node and of an area containing an ending node of the link arc, and use the greater one of the local approximate widths as the local approximate width of the area containing the link arc

Regard the length between the starting node and the ending node of the link arc, except for the internal length of the type-III triangles, as the valid length of the link arc, and determine whether the valid length of the link arc is less than the local approximate width of the area containing the link arc, wherein, if so, the starting node and the ending node of the link arc are associated and this link arc is an associated arc, and if not, the starting node and the ending node of the link arc are not associated and this link arc is not an associated arc

Put all associated arcs obtained in the above step into an associated arc set; successively select one associated arc from the associated arc set as a first associated arc and use the starting node and the ending node of the first associated arc as tracking nodes, regard an associated arc containing the starting node or the ending node of the first associated arc as a second associated arc and record the second associated arc in the associated arc set; and, at the end of the detection of all associated arcs, cluster the associated arcs to obtain an intersection concentration result

**Fig. 7**

Fig. 8

Fig. 9

Fig. 10

Weight, by the CRITIC method, the length, connectivity, proximity and betweenness of a link arc to obtain an importance of the link arc

Select a three-intersection node having an associated arc on only one side as a starting node for stroke connection tracking, and use the link arc of the three-intersection node as a tracking arc and a node on the other side of the tracking arc as a tracking node

Use link arcs for the tracking node as a stroke connection candidate set, and calculate the importance of each link arc

Preferentially link a link arc having a high importance to a previous link arc to form a stroke

On the basis of the above steps, continuously track upward to calculate the stroke connection until there is no link arc for the tracking node, and then end the single stroke connection

Explore branched link arcs for the existing stroke connection until all link arcs in the intersection-intensive area have been calculated, and then end the calculation of the stroke connection

On the basis of the calculated stroke connection in the intersection-intensive area, by using two link arcs on the stroke connection as reference arcs, and by regarding a midpoint of a line between two points on a side of a type-III triangle as an adjustment position for the three-intersection node, link three link arcs associated with the three-intersection node to this midpoint to complete the adjustment of the skeleton line in the three-intersection area

**Fig. 11**

**Fig. 12**

**Fig. 13**

**Fig. 14**

**Fig. 15**

**Fig. 16**

**EP 3 723 044 A1**

## EUROPEAN SEARCH REPORT

Application Number

EP 19 21 9778

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | CHENGMING LI ET AL: "Skeleton Line Extraction Method in Areas with Dense Junctions Considering Stroke Features", ISPRS INTERNATIONAL JOURNAL OF GEO-INFORMATION, vol. 8, no. 7, 16 July 2019 (2019-07-16), page 303, XP055668028, DOI: 10.3390/ijgi8070303 * the whole document * | 1-6 | INV. G06T7/13 |
| X | CHENGMING LI ET AL: "A method for the extraction of partition lines from long and narrow patches that account for structural features", TRANSACTIONS IN GIS, vol. 23, no. 2, 18 March 2019 (2019-03-18), pages 349-364, XP055668024, GB ISSN: 1361-1682, DOI: 10.1111/tgis.12523 | 1,5 | |
| Y | * sections 2 and 3 * | 6 | |
| Y | CHENGMING LI ET AL: "An Automated Processing Method for Agglomeration Areas", ISPRS INTERNATIONAL JOURNAL OF GEO-INFORMATION, vol. 7, no. 6, 29 May 2018 (2018-05-29), page 204, XP055668030, DOI: 10.3390/ijgi7060204 * section 3 * | 6 | TECHNICAL FIELDS SEARCHED (IPC) G06T |

The present search report has been drawn up for all claims

| Place of search | Date of completion of the search | Examiner |
|---|---|---|
| Munich | 18 March 2020 | Rockinger, Oliver |

**EP 3 723 044 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710973188

**Non-patent literature cited in the description**

- **CHEN.** *Research on Automatic Search Algorithms of Skeleton Lines and Centroids of Polygons*